# EUROPEAN PATENT SPECIFICATION

(11) **EP 3 105 041 B1**
(45) Date of publication and mention of the grant of the patent: **08.04.2020**
(21) Application number: 15705394.3
(22) Date of filing: 11.02.2015
(51) Int. Cl.: B29C 70/46, B29C 70/38, A63B 59/70, A63B 59/55, A63B 60/42, A63B 60/50, A63B 102/02, A63B 102/04, A63B 102/14, A63B 102/20, A63B 102/22, A63B 102/24, B29L 23/00, B29L 31/52

(54) **METHOD OF MANUFACTURING AN ELONGATED ARTICLE, ELONGATED ARTICLE, OBTAINABLE BY THE METHOD**
VERFAHREN ZUR HERSTELLUNG EINES LÄNGLICHEN ARTIKELS, DURCH DAS VERFAHREN HERSTELLBARER LÄNGLICHER ARTIKEL
PROCÉDÉ DE FABRICATION D'UN ARTICLE ALLONGÉ, ARTICLE ALLONGÉ POUVANT ÊTRE OBTENU PAR CE PROCÉDÉ

(30) Priority: 11.02.2014 NL 2012239
(43) Date of publication of application: 21.12.2016
(73) Proprietor: Wesp Holding B.V., 5626 DC Eindhoven (NL)
(72) Inventor: GIEBELS, Marc Marinus Johannes Leonardus, NL-5663 EZ Geldrop (NL); VAN PANHUYS, Haro Egbert Georg Roderik, NL-5211 DA 's-HERTOGENBOSCH (NL); SLUITERS, Johan Erhard, NL-5737 PE Lieshout (NL)
(74) Representative: Brouwer, Hendrik Rogier
(86) International application number: PCT/NL2015/050090
(87) International publication number: WO 2015/122768

(56) References cited:
- EP-A2- 0 245 879
- EP-A2- 0 978 367
- DE-A1- 4 415 509
- US-A- 4 266 435
- US-A- 5 888 601
- US-A1- 2009 011 876
- US-A1- 2012 097 323

## Description

### FIELD OF THE INVENTION

The invention relates to a method of manufacturing an elongated article having a shaft and a functional head section. The invention further relates to an elongated article, obtainable by the method.

### BACKGROUND OF THE INVENTION

The elongated articles of the disclosure comprise a shaft bridging a distance between a grip section at one end of the shaft and a functional head section provided at another end of the shaft. The head section is functional in the sense that it is configured to perform a function. In sport articles, this function comprises but is not limited to contacting or hitting an object, such as a ball, a puck, a shuttle, a water or floor surface, and the like, or attaching an object, such as a fishing line for instance. In health care articles, such as in walking aids, the function may be offering support. The grip section may be provided with a cover for ease of handling.

Several methods of manufacturing an elongated article, such as sport articles, are applied today.

One known method of manufacturing a sport article for instance comprises providing a solid mandrel, for instance made of wood, and overlaying this core mandrel with reinforcing fibers or prepreg material, optionally applying a matrix material and consolidating the matrix material to form the sport article. Although a sport article obtained by such method generally shows adequate stiffness and strength, its weight is often too high.

Another known method of manufacturing a sport article provides an inflatable mandrel, for instance made of a plastic foil, and overlays this core mandrel with reinforcing fibers, applies a matrix material and consolidates the matrix material to form the sport article. This method may also be combined with the previous known method. Although a sport article obtained by such method generally has a relatively low weight, it shows inadequate stiffness and strength.

EP 0978367 A2 discloses a method for manufacturing a tubular rectilinear article. The method comprises providing a core mandrel overlaying carbon fibers wetted with a matrix material onto the core mandrel by filament winding to form first wall parts, providing shaping elements to the overlaid core mandrel, overlaying carbon fibers wetted with a maitrix material onto the core mandrel and the shaping elements by filament winding to form second wall parts, and curing the matrix material. The core mandrel may be removed afterwards to form an inner cavity in the tube.

US 2009/011876 A1 discloses an icehockey stick including a shaft and a blade. The shaft can be formed of composite materials and cured first with the blade being subsequently cured onto the end of the shaft. The shaft can be hollow and has an opening at its blade end through which inserts can be inserted in and removed from the interior cavity of the shall to provide a desired weight distribution for instance.

EP 0245879 A2 and US 4266435 A both disclose conveyor chains of flexibly linked elements. There is no suggestion to use the disclosed chains as weight distributing elements in elongated articles.

The known methods described above are time-consuming and are not very reproducible, since they are typically carried out by hand. The known methods further produce elongated articles that are not customized, i.e. the articles produced are poorly adapted to personal wishes or capabilities.

The aim of the present invention is to provide an improved method of manufacturing an elongated article, which method provides an elongated article with at least a similar performance for a lower weight, and further allows customizing the article according to a user's wishes.

### SUMMARY OF THE INVENTION

In a first aspect of the invention, the above and other aims are provided by a method in accordance with claim 1. The method in particular comprises the steps of providing a dimensionally stable core mandrel; overlaying first reinforcing fibers onto the core mandrel to form one or more first wall parts; providing at least one shaping element to the overlaid core mandrel; overlaying second reinforcing fibers onto the core mandrel and the at least one shaping element to form one or more second wall parts; providing a matrix material and consolidating the matrix material; the core mandrel being provided to form an elongated article having a well defined inner cavity. According to the invention, the core mandrel or a part of the core mandrel is removed after the step of providing a matrix material and consolidating the matrix material, in order to form the inner cavity.

According to the invention, a core mandrel is provided to form an article having a well defined inner cavity. A well defined inner cavity is defined in the context of the present invention as an inner cavity having dimensions that do not deviate between cross-sections of the elongated article by more than 10%, more preferably by more than 5%, and most preferably by more than 2%. The dimensions of the inner cavity may comprise one of a height, a width, a diameter or radius for instance. In an embodiment of the invention, the core mandrel has a constant cross-section along the substantially whole length of the elongated article.

An elongated article in the context of the present disclosure comprises any article having a shaft and a functional head section, preferably with a length to transverse dimension ratio of more than 2, more preferably more than 5, and most preferably more than 10.

In an embodiment of the invention, a hollow core mandrel is provided with a well defined inner cavity. In such case, the core mandrel is provided with an internal part that when removed forms a well defined inner cavity. Another part of the core mandrel in this embodiment remain part of the manufactured elongated article and the well defined inner cavity of the core mandrel then also defines the well defined inner cavity of the elongated article.

According to the invention, a method is provided wherein the core mandrel is provided with a well defined outer surface and the core mandrel is removed, preferably after having provided a matrix material and, more preferably, after having consolidated the matrix material. Removal of the core mandrel may for instance be performed by sliding it out of one end of the elongated article. Other methods may include providing a collapsible core mandrel, for instance by providing a core mandrel with flexible skin and a filler, which filler may be air or a fluid, and removing the filler from the skin, or by providing a core mandrel having interlocking parts that may be disassembled.

The method in accordance with the invention provides a dimensionally stable core mandrel to form an elongated article having a well defined inner cavity. In an embodiment, one core mandrel is provided. In another embodiment, two or more core mandrels are provided that are overlaid with the first and/or second reinforcing fibers to form a elongated article having two or more well defined inner cavities.

A well defined outer surface of the core mandrel is defined in the context of the present disclosure as an outer surface having dimensions that do not deviate between cross-sections of the elongated article by more than 10%, more preferably by more than 5%, and most preferably by more than 2 %. The dimensions of the outer surface may comprise one of a height, a width, a diameter or radius for instance. In an embodiment of the invention, the cross-section of the core mandrel is rectangular, by which is meant that the inner cavity and/or the outer surface of the core mandrel has a rectangular cross-section. However, the cross-section of the core mandrel may have any other shape.

According to the invention, the core mandrel is dimensionally stable, which, in the context of the present application, means that the dimensions of the core mandrel are not changing substantially at the pressure and temperature levels applied in the method. A change is considered not substantial when less than 10 %, more preferably less than 5 %, most preferably less than 2 %.

Suitable elongated articles comprise but are not limited to sport articles, such as fishing rods, rowing oars, field hockey sticks, ice hockey sticks, baseball bats, crickets bats, tennis, lacrosse and badminton rackets, and the like, a field hockey stick being preferred. The functional head section of the elongated article may be a blade, such as in ice hockey articles, or a curl, such as in field hockey articles. The shaft and functional head section of the elongated article may be formed apart and joined later, or formed in one piece, the latter being the preferred method. Other exemplary elongated articles comprise health care articles, such as walking sticks for instance. The functional head section in such embodiments provides support on a surface.

In an embodiment of the invention, a method is provided wherein the core mandrel is provided with at least one shaping element before overlaying the first reinforcing fibers. This embodiment allows to vary the shape of the first wall parts for a given core mandrel.

The method in accordance with the disclosure allows manufacturing an elongated article with a relatively low weight. A particularly useful embodiment provides a method wherein one or more shaping elements are removed from the elongated article, preferably after having provided a matrix material and, more preferably, after having consolidated the matrix material. The thus formed cavities may be filled with materials, such as weight distributing materials, if desired.

The core mandrel in accordance with the disclosure may extend over a part of a length dimension of the elongated article only. As will become apparent further below, it has advantages in an embodiment of the method when the core mandrel substantially extends from a grip end of the shaft to an outer end of the functional head section. This allows providing the elongated article with a well defined cavity substantially all along its length, in an embodiment of the method wherein the inner cavity substantially extends from a grip end of the shaft to an outer end of the functional head section. This can be achieved either by providing the core mandrel with an inner cavity that extends from a grip end of the shaft to an outer end of the functional head section, or by providing a core mandrel that extends from a grip end of the shaft to an outer end of the functional head section, and removing the core mandrel.

Overlaying the core mandrel, optionally provided with one or more shaping elements, with the first and/or second reinforcing fibers may be performed by any method known in the art, such as, but not limited to, hand lay up of fibers, pre-impregnated fibers (prepregs), fabrics and/or braided structures, filament and/or pre-impregnated tow (towpreg) winding methods, pultrusion, and any combination of these methods. It may be possible to use comingled fibrous structures that may comprise two different fibers, one of which may be a fibrous matrix material and the other a reinforcing fiber. The (already partly) overlaid core mandrel may be overlaid with one or more layers of reinforcing fibers, depending on needs.

A particularly useful embodiment of the disclosure provides a method wherein overlaying with the first and/or second reinforcing fibers is performed by in situ braiding the reinforcing fibers onto the core mandrel or overlaid core mandrel. This embodiment in particular provides a method of manufacturing an elongated article that is fast, reliable, and reproducible, and yet yields desirable mechanical properties and performance. In situ-braiding may be performed on one core mandrel to produce one elongated article, but is preferably performed on a plurality of core mandrels, arranged in series, to produce a plurality of elongated articles in one braiding operation. In an embodiment of the method, the in-situ braiding is performed from a grip end of the shaft to an outer end of the functional head section and/or vice versa.

The cross-sectional geometrical shape of the core mandrel and/or, optionally also the geometrical shape of shaping elements provided on the core mandrel before overlaying the first reinforcing fibers, defines the geometrical shape of the first wall part or parts, as well as their exact position in a cross-section of the elongated article. A useful embodiment of the disclosure provides a method wherein the functional head section of the elongated article comprises a contacting surface, and a first wall part extends perpendicular to said contacting surface.

The shaping elements may comprise foam elements, that are foamed in-situ or foamed prior to molding. Other suitable shaping elements comprise inflatable elements that may be filled. Shaping elements are conveniently made from polymeric materials, and may be (locally) reinforced, for instance with reinforcing fibers.

The first and/or second reinforcing fibers may comprise glass fibers, carbon and graphite fibers, metal fibers, drawn polymeric fibers, such as aramid fibers, PBO fibers (Zylon®), M5® fibers, ultrahigh molecular weight polyethylene or polypropylene fibers, as well as natural fibers, such as flax and wood fibers, and/or combinations of said fibers. The first and second reinforcing fibers may be the same, but this is not necessary. They may also be combined with a matrix material, for instance when using towpregs.

The core mandrel may be made of a metal but is preferably made of a polymer such as a polyolefin, of which low density polyethylene (LDPE), polyoxymethylene (POM) and/or polyvinylidene difluoride (PVDF) are preferred. A core mandrel of cured monomers may also be used.

In an embodiment of the method according to the disclosure, the matrix material comprises a thermosetting resin that is consolidated by curing. Suitable examples include epoxy resins, unsaturated polyester or vinylester resins, polyurethane resins, and the like. In another embodiment of the method, the matrix material comprises a thermoplastic polymer that is consolidated by cooling. Suitable examples comprise polyolefin's, such as polyethylene or polypropylene, styrene polymers such as polystyrene or ABS, thermoplastic polyurethanes, and the like. Combinations of thermosetting and thermoplastic materials may also be used. The matrix material may be provided as a separately applied constituent, or may be incorporated in an intermediate product, such as a prepreg or towpreg.

The method in accordance with the disclosure provides an elongated article having a well defined cavity, which preferably extends substantially along the whole length of the elongated article. The well defined cavity provides the elongated article with a desirably high stiffness and strength, and provides the inner cavity with at least one weight distributing element. The at least one weight distributing element may be provided in any inner cavity provided in the elongated article. It is for instance possible to form the inner cavity by providing a core mandrel having an inner cavity, in which embodiment the at least one weight distributing element is provided in said cavity of the core mandrel. In another embodiment, the inner cavity is formed by removing a core mandrel after forming, in which embodiment the at least one weight distributing element is provided in the cavity formed by the removed core mandrel. In yet another embodiment, the at least one weight distributing element is provided in an inner cavity, formed by removal of at least one shaping element.

The weight distribution elements may be made of a metal, but a polymeric weight distributing element is preferred. Polymers to be used in the weight distribution elements comprise all suitable for the purpose polymers known to one skilled in the art. Preferred polymers comprise high density polyethylene (HDPE), polyoxymethylene (POM) and/or polyvinylidene difluoride (PVDF). The higher density materials are preferably used in the functional head section of the elongated article.

The weight distribution element may be provided in one piece that preferably extends along the substantially complete length of the elongated article. In this embodiment, weight is distributed by varying the density of the weight distribution element along its length. This can for instance be done by applying different materials along the element's length, or by providing holes or cavities in the weight distribution element.

In an embodiment of the method according to the disclosure weight distributing elements are interconnected to form a string of interconnected weight distributing elements. The length of the weight distributing element can be varied by changing the number of interconnected elements in the string. The properties of each element can be chosen in function of the desired weight distribution, and an embodiment of the disclosure provides a method wherein weight distributing elements with a different density and/or shape are provided in the inner cavity.

The cross-sectional dimensions of the weight distributing element or elements are chosen such that the elements are to be incorporated in the inner cavity of the elongated article. In order to at least partly prevent noise generation, the method provides at least one weight distributing element of which a cross-sectional dimension is about equal to a cross-sectional dimension of the inner cavity. More preferably, the cross-section of the at least one weight distributing element is about equal to the cross-section of the inner cavity. A dimension is considered about equal to another dimension when deviating less than 10 %, more preferably less than 5 % from the other dimension.

In another useful embodiment, the at least one weight distributing element is used in the method of the disclosure as the core mandrel.

In an embodiment of the method, the weight distributing elements in the string are interconnected through a hook-like connection. Such a connection helps to accommodate a curvature in the elongated article and provides a connection between elements that does not add unnecessary weight to the elongated article. The connection also allows to withdraw a string of weight distributing elements from the inner cavity of the elongated article. The weight distribution elements themselves are of relatively low stiffness to accommodate a curvature in the elongated article.

A particularly suitable embodiment of the method according to the disclosure provides a string of weight distributing elements in which the hook-like connection is obtained by interlocking cantilevered end sections of adjacent weight distributing elements.

Another embodiment provides a method wherein a part of the at least one weight distributing element is slightly oversized with respect to the cross-section of the inner cavity, by which is meant that the height or width dimension of said part is at most 10% larger, more preferably at most 5 % larger, than the corresponding height or width dimension of the inner cavity. A particularly useful embodiment provides a method wherein a part of cantilevered end sections of weight distributing elements is slightly oversized with respect to the cross-section of the inner cavity. Said part in this embodiment acts as a resilient pressure element.

Another embodiment of the disclosure provides a method wherein the at least one weight distributing element extends from a grip end of the shaft to an outer end of the functional head section. This embodiment offers increased flexibility in distributing weight.

In yet another embodiment of the method according to the disclosure at least one weight distributing element comprises a stack of lamellae. Such elements are readily provided in an inner cavity of an elongated article exhibiting a rather large curvature, such as encountered in the curl-shaped functional head section of a field hockey stick for instance. A weight distributing element according to this embodiment conforms to said curvature by mutual shearing of the lamellae. A preferred embodiment uses a weight distributing element in which the lamellae originate from a common solid part of the element. This effectively holds the lamellae together. Another preferred embodiment uses a weight distributing element in which the lamellae are made of different materials. This allows to distribute weight in a cross direction of the weight distributing element.

Another aspect of the invention relates to an elongated curved article according to the features of claim 13, that is obtainable by a method according to the invention. The elongated article comprises a shaft and a functional head section, preferably configured to contact an object, and further comprises a well defined inner cavity that preferably substantially extends from the grip end of the shaft to the outer end of the functional head section.

The article of the disclosure has an inner cavity, the dimensions of which do not deviate between cross-sections of the elongated article by more than 10%, more preferably by more than 5%, and most preferably by more than 2 %.

The well defined inner cavity of the elongated article offers the opportunity to provide an elongated article with weight distributing elements in the inner cavity. The weight distributing elements preferably extend along substantially the whole length of the elongated article, in particular extending from a grip end of the shaft of the elongated article to an outer end of the functional head section.

An elongated article according to the invention shows unprecedented mechanical properties, in particular flexural stiffness and strength.

The disclosure relates also to a weight distributing system, adapted to be provided in an inner cavity of an elongated article, the system comprising a string of interconnected weight distributing elements. The weight distributing elements in the string are preferably interconnected through a hook-like connection, or, preferrably, comprise a stack of lamellae.

### BRIEF DESCRIPTION OF THE FIGURES

The invention will now be described in more detail by reference to the accompanying figures and a description of specific embodiments, without however being limited thereto. In the figures:
Figures 1A-1F schematically show a number of steps of the method of manufacturing a hockey article in accordance with an embodiment of the invention;
Figure 2 schematically shows a perspective view of a braiding device to be used in an embodiment of the present disclosure;
Figures 3A-3E schematically show a number of steps of the method of manufacturing a hockey article in accordance with another embodiment of the invention;
Figures 4A-4D schematically show a number of steps of a method to obtain a reinforced shaping element in accordance with the invention;
Figures 5A-5D schematically show a perspective view of weight distributing elements which does not fall within the scope of the claims;
Figure 6 schematically shows a perspective view of a weight distributing system which does not fall within the scope of the claims; and
Figure 7 schematically shows a perspective view of the weight distributing system of figure 6 in a shape that conforms to the shape of a core mandrel 1, or inner cavity in which the string is received.

### DETAILED DESCRIPTION OF EMBODIMENTS

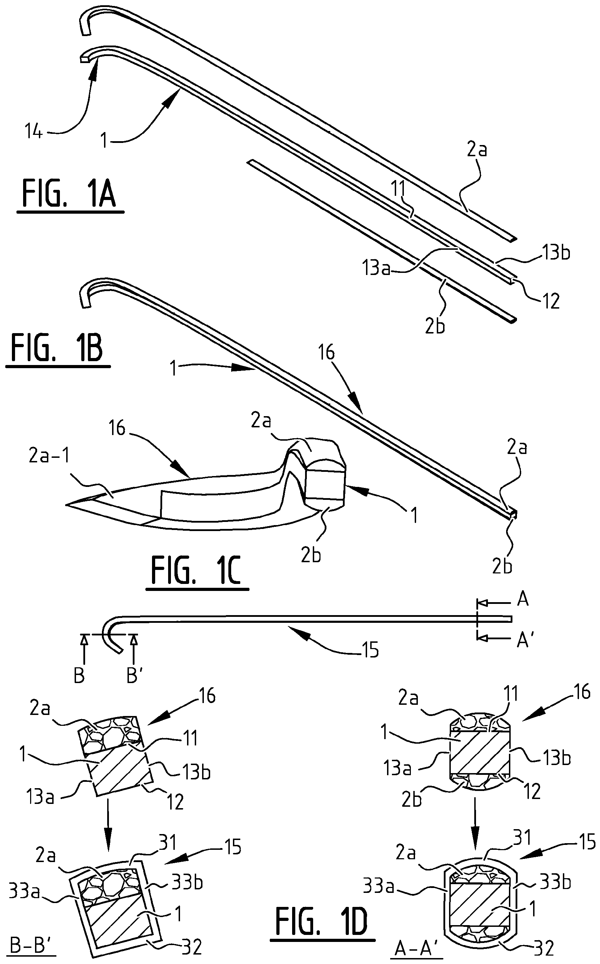

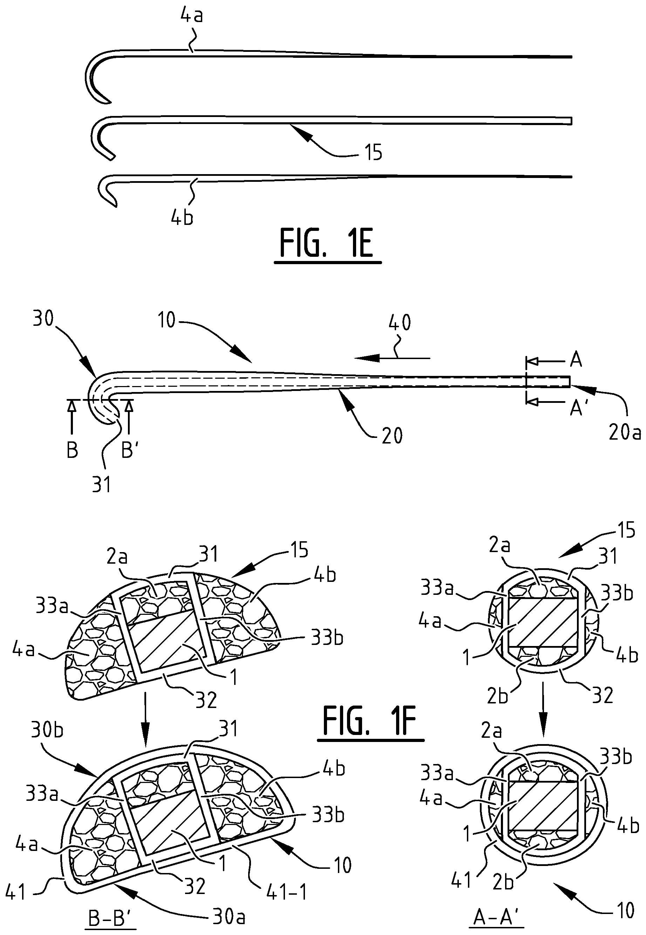

With reference to Figures 1A-1F an embodiment of the method according to the invention is shown, in particular for manufacturing a field hockey stick 10. The field hockey stick 10 shown in Figure IF comprises a shaft 20 and a curled head section 30. The head section 30 is configured to hit a hockey ball, for which purpose the head section 30 is provided at one side with a relatively flat hitting surface 30a, as shown in Figure IF. The opposite (or backhand side) side usually comprises a curved surface 30b. The hockey stick 10 is at a non-hitting end of the shaft 20 provided with a grip section 20a, which is for comfort provided with a wrapped tape and optionally a foamed grip.

In a first step of the manufacturing method, shown in Figure 1A, a dimensionally stable core mandrel 1 is provided in the form of a high density polyethylene (HDPE) or POM polymer rod with a constant cross-section along the length direction 40 of the field hockey stick 10. Although the core mandrel 1 may be provided with a well defined inner cavity, the embodiment shown employs a solid core mandrel 1. The cross-section of the core mandrel 1 is rectangular and defines an upper surface 11, a lower surface 12, and two side surfaces (13a, 13b). The core mandrel 1 substantially extends from the grip end 20a of the shaft 20 to an outer end 31 of the head section 30, and is therefore provided with a curled section 14 that corresponds to the curled head section 30 of the hockey stick 10. In order to define a well defined inner cavity of the field hockey stick 10, the core mandrel 1 has well defined outer surfaces (11, 12,13a, 13b). The cross-dimensions of the core mandrel 1 thereto do not deviate between cross-sections of the mandrel 1 by more than 10%, more preferably by more than 5%, and most preferably by more than 2 %.

In a next step of the method, the core mandrel 1 is provided with two shaping elements (2a, 2b), as shown in Figure 1A in exploded view and in Figure IB in assembled view, to form an intermediate product 16. Shaping element 2a is provided in contact with upper surface 11 and extends in the length direction 40 of the field hockey stick 10 along substantially its complete length, i.e. from the grip section 20a to about the outer end 31 of the head section 30. Shaping element 2b is provided in contact with lower surface 12, extends in the length direction 40 of the field hockey stick 10 along a part of the length only, and is tapered down in the direction of the head section 30. As shown in Figure 1C, the shaping element 2a forms a capped end portion 2a-1 of the core mandrel 1. The shaping elements (2a, 2b) in the embodiment shown comprise polyurethane foam elements that have been foamed in-situ. They may also be foamed prior to molding and milled or cut into the desired shape.

Figure 1D shows another step of the method in which the assembly of core mandrel 1 and shaping elements (2a, 2b) is overlaid with first reinforcing fibers to form an intermediate product 15 having first wall parts (31, 32, 33a, 33b). Overlaying is conveniently performed by in-situ braiding, as will be described further below. The first wall parts comprise an upper wall part 31, a lower wall part 32, and two side wall parts (33a, 33b), but form a continuous structure around core mandrel 1 and shaping parts (2a, 2b).

Figure 1E shows yet another step of the method in which the overlaid structure 15 of figure 1D is provided with additional shaping elements (4a, 4b), as shown in figure IE in exploded view. Shaping element 4a is provided in contact with the left hand first wall part 33a and extends in the length direction 40 of the field hockey stick 10 along substantially its complete length, i.e. from the grip section 20a to about the outer end 31 of the head section 30. Shaping element 4b is provided in contact with the right hand side first wall part 33b, and also extends in the length direction 40 of the field hockey stick 10 along substantially its complete length. As shown in the cross-sections of Figure IF, the shaping elements (4a, 4b) are applied at both sides of the overlaid structure 15 in contact with side wall parts (33a, 33b), and leave the upper and lower first wall parts (31, 32) uncovered. The shaping elements (4a, 4b) may also comprise polyurethane foam elements for instance.

Figure IF shows yet another step of the method in which the assembly of core mandrel 1 and shaping elements (2a, 2b, 4a, 4b) is overlaid with second reinforcing fibers to form a product 10, having second continuous wall part 41, again conveniently formed by in-situ braiding of reinforcing fibers, such as carbon or graphite fibers for instance. The second wall part 41 comprises a relatively flat lower wall part 41-1 that is in immediate contact with lower first wall part 32 to form a stiff and elastic hitting surface 30a. The wording elastic here means that only a minor amount of energy, or nil, is dissipated. The stiffness of the hitting surface 30a is also provided by first wall parts (33a, 33b) that extend perpendicular to said hitting surface 30a.

In a further step of the method, a matrix material such as an epoxy resin is provided to the assembly and cured at a pressure and temperature level in accordance with the suppliers instructions. Typical pressures may range from 1 bar to more than 7 bar, whereas typical temperatures may range from room temperature up to 175°C and more. The material of the core mandrel 1 is selected such that its dimensions do not substantially change at the pressure and temperature levels used in the method.

In another step of the method the core mandrel 1 is finally removed from the formed hockey stick 10. Removal can be performed by sliding the core mandrel 1 out of the hockey stick 10 through an opening at the grip end section 20 for instance. A hockey stick 10 is now formed having a well defined inner cavity with internal dimensions that conform to the outer dimensions of the removed core mandrel 1. In the embodiment shown in figures 1A to IF, the shaping elements (2a, 2b, 4a, 4b) remain in the manufactured field hockey stick 10. In other embodiments, some of the shaping elements (2a, 2b, 4a, 4b) may be removed from the hockey stick 10, for instance shaping element 2b, in order to save additional weight.

In useful embodiments of the method according to the disclosure overlaying with the first and/or second reinforcing fibers is performed by in situ braiding the reinforcing fibers onto the core mandrel 1, optionally supplemented with shaping elements (2a, 2b, 4a, 4b).

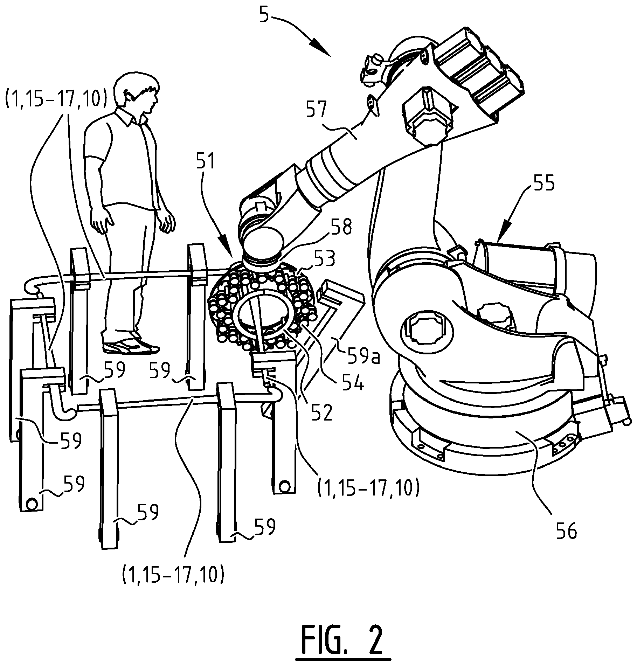

With reference to figure 2, a useful device 5 for braiding the first and/or second reinforcing fibers (not shown) onto core mandrels 1 (or intermediate products 15-17, or product 10) to obtain a braided field hockey stick 20 is shown. Other devices may also be used. Device 5 comprises a braiding machine 51 with a track plate 53 that carries a number of fiber bobbin carriers 54, provided with reinforcing fibers, and a forming ring 52, attached to the track plate 53. The braiding machine 51 encloses a looped braiding mandrel, comprising a number of core mandrels 1, intermediate products (15-17) or products 10, positioned in series, and is adapted to braid layers of reinforcing fibers around the braided mandrel. A fully overlaid core mandrel 1 corresponds to a hockey stick 10. Positioning means in the form of a robot 55 effectuate relative movement of the mandrel and the braiding machine 51 during braiding. The robot 55 essentially consists of a turntable 56 around which a pivoting arm 57 can be rotated. Pivoting arm 57 is at an end thereof provided with gripping means 58 that act upon the braiding machine 51. The robot 55 is connected to a computer (not shown), which contains the data to steer the robot 55, in particular pivoting arm 57 and gripping means 58 along any desirable path. The looped mandrel formed by mandrels (1, 15-17, or 10) positioned in series is held in a stationary position by support poles 59 provided with gripping means. The braiding machine 51 is manipulated by the robot 55 about the mandrel along a path, determined by the computer, while simultaneously rotating the bobbins 54 around a central axis of the track plate 53 and forming ring 52. In this way a plurality of reinforcing fibers is positioned onto the mandrel to produce several fiber layers that form a continuous looped braided structure. In order for the braiding machine 51 to pass a support pole 59, support poles 59 may be temporarily placed in a tilted position, as shown in figure 2 by pole 59a.

In an exemplary embodiment, the mandrel formed by the series of mandrels (1, 15-17 or 10) is braided with high strength carbon fibers. The multilayered fibrous braided structures thus created form the first (31, 32, 33a, 33b) and second (41, 41-1) wall parts of the hockey stick 10. The braided structures extend from a grip end of the shaft of each mandrel (1, 15-17 or 10) to an outer end of the head section of each mandrel (1, 15-17 or 10) and form a continuous looped structure. The braided structures are then divided to form separate hockey sticks 10 and impregnated with a matrix material and consolidated.

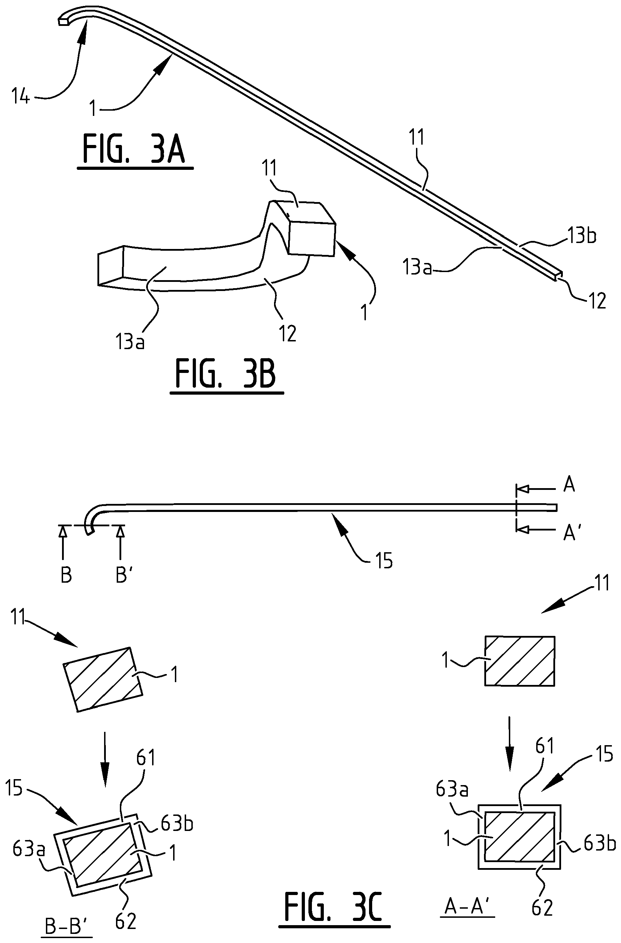

With reference to Figures 3A-3E another embodiment of the method for manufacturing a field hockey stick 10 according to the invention is shown.

In a first step of the manufacturing method, shown in Figures 3A and 3B, a dimensionally stable solid core mandrel 1 is provided. The high density polyethylene (HDPE) or POM polymer rod has a constant cross-section along the length direction 40 of the field hockey stick 10. The cross-section of the core mandrel 1 is rectangular and defines an upper surface 11, a lower surface 12, and two side surfaces (13a, 13b). The core mandrel 1 substantially extends from the grip end 20a of the shaft 20 to an outer end 31 of the head section 30, and is provided with a curled section 14 that corresponds to the curled head section 30 of the hockey stick 10. In order to define a well defined inner cavity of the field hockey stick 10, the core mandrel 1 has well defined outer surfaces (11, 12,13a, 13b). The cross-dimensions of the core mandrel 1 thereto do not deviate between cross-sections of the mandrel 1 by more than 10%, more preferably by more than 5%. and most preferably by more than 2 %.

Figure 3C shows a next step of the present embodiment in which the core mandrel 1 of figures (3A, 3B) is overlaid with first reinforcing fibers to form first wall parts (61, 62, 63a, 63b), which is conveniently performed by in-situ braiding, as was described above. The first wall parts comprise an upper wall part 61, a lower wall part 62, and two side wall parts (63a, 63b), but form a continuous structure around the core mandrel 1.

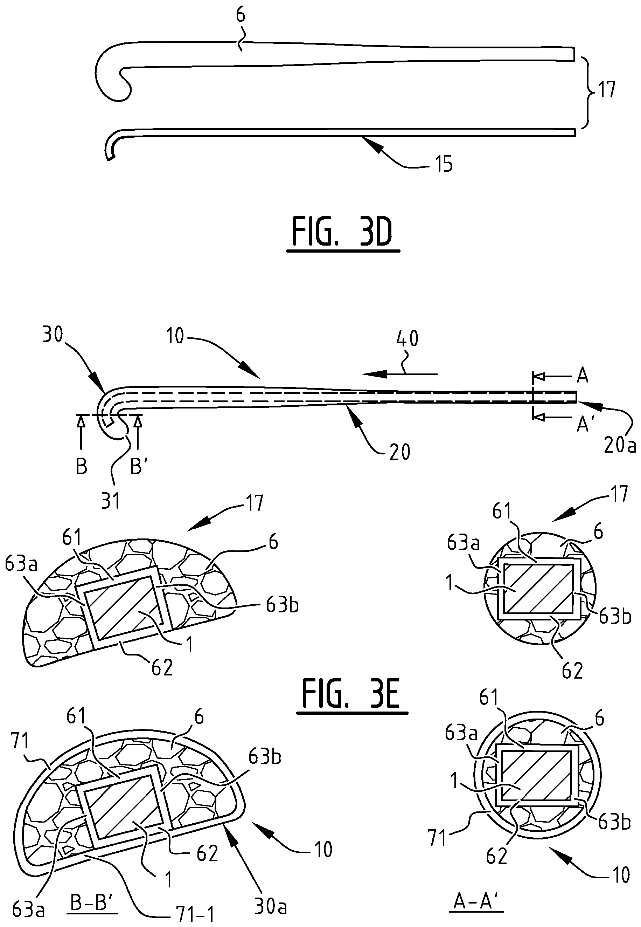

Figure 3D shows yet another step of the present embodiment in which the overlaid structure 15 of figure 3C is provided with a shaping element 6, as shown in figure 3D in exploded view to form an intermediate product 17. Shaping element 6 is at the grip end section 20a provided around the overlaid structure 15 in contact with the left hand first wall part 63a, the right hand first wall part 63b, the upper first wall part 61 and the lower first wall part 62, and extends in the length direction 40 of the field hockey stick 10 along substantially its complete length, i.e. from the grip section 20a to about the outer end 31 of the head section 30. Shaping element 6 at the outer end 31 is provided in contact with the side wall parts (63a, 63b) and the upper wall part 61 only. The shaping element 6 may comprise a polyurethane foam for instance.

Figure 3E shows yet another step of this embodiment in which the intermediate product 17 (the assembly of core mandrel 1 and shaping element 6) is overlaid with second reinforcing fibers to form a second continuous wall part 71, again conveniently formed by in-situ braiding of reinforcing fibers, such as carbon or graphite fibers for instance. The second wall part 71 comprises a relatively flat lower wall part 71-1 that is in immediate contact with lower first wall part 62 to form a stiff and elastic hitting surface 30a.

As already described above, further steps of the method comprise providing and consolidating a matrix material and removal of the core mandrel 1 from the formed hockey stick 10. A hockey stick 10 is again formed having a well defined inner cavity with internal dimensions that conform to the outer dimensions of the removed core mandrel 1. In the embodiment shown in figures 3A to 3E, the shaping element 6 remains in the manufactured field hockey stick 10, but it may also be removed from the hockey stick 10 to save additional weight.

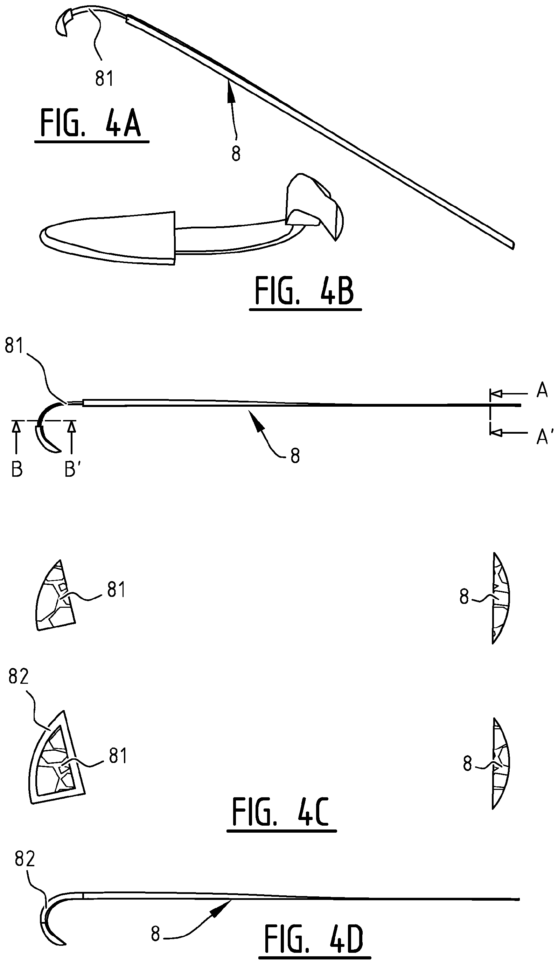

Figures 4A - 4D shows the possibility of adding local reinforcements to a shaping element 8 and/or to a shaping element provided on a (partly overlaid) core mandrel. Figure 4A shows a shaping element 8, a section 81 of which is reduced in dimensions, for instance by rejuvenating. The cross-section of the shaping element 8 changes along the length of the hockey stick 10, as appears from cross-sections A-A' and B-B' of figure 4C.

As shown in figure 4C, the reduced dimension part 81 of the shaping element 8 is overlaid with reinforcing fibers to form a wall part 82 around the reduced dimension part 81 of the shaping element 8. As shown in figure 4D, the thickness of the wall part 82 is built up to conform with those parts of the shaping element 8 that were not reduced in dimension. The resulting, locally reinforced shaping element 8 of figure 4D may then be used in the method according to the invention, as described above in the context of the embodiments shown in figures 1A-1F and 3A-3E. In the present example, the reinforced shaping element 8 of figure 4D may for instance be used as shaping element 4a of figure IE and/or shaping element 6 of figure 3D.

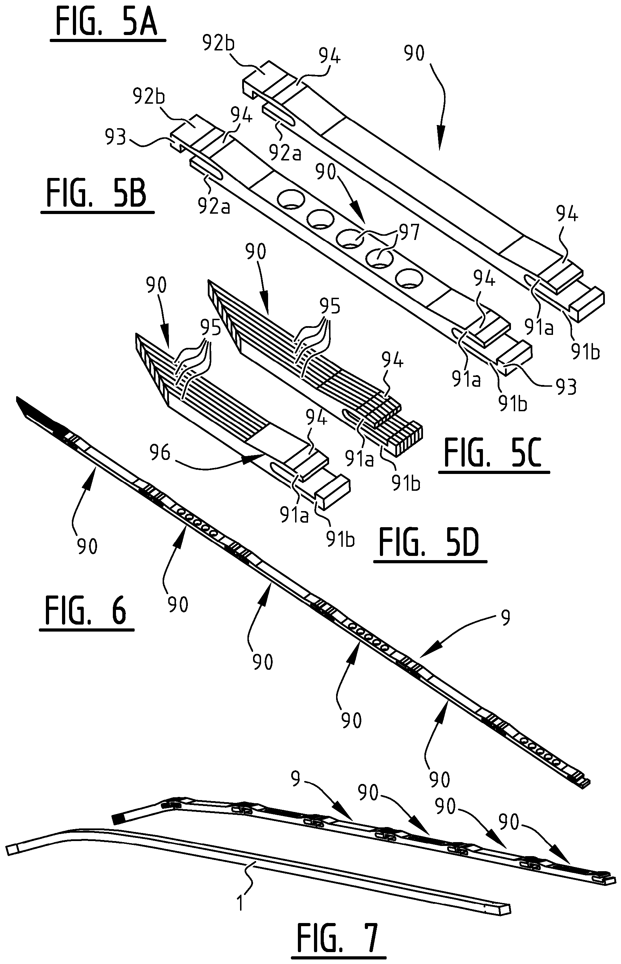

With reference to figures 5A-5D and figures 6 and 7, a weight distributing system 9 in accordance with another aspect of the disclosure is shown. The weight distributing system 9 comprises a string of interconnected weight distributing elements 90, of which several embodiments are shown in figures 5A-5D. The weight distributing system 9 is adapted to be provided in the well defined inner cavity of the hockey stick 10, which inner cavity corresponds dimensionally with the removed core mandrel 1, as shown in figure 7, or with an inner cavity of a hollow core mandrel 1. The string 9 of weight distributing elements 90 in the embodiment shown in figures 6 and 7 extends from the grip end 20a of the shaft 20 to an outer end 31 of the head section 30.

The weight distributing elements 90 in the string 9 are interconnected through a hook-like connection, which, in the embodiments shown in figures 5A-5D comprise first cantilevered end sections (91a, 91b) provided at one end side of a weight distributing element 90 and second cantilevered end sections (92a, 92b) provided at another end side of said weight distributing element 90. The cantilevered end sections (91b, 92b) are each provided with an upstanding end ridge of lip 93 by which two end sections (91b, 92b) may be interlocked to form a string 9, as shown in figure 7 for instance. The interlock allows the string 9 to be provided in the inner cavity of the hockey stick 10, but also to pull the string out of the inner cavity without the need for a separate carrier for the weight distributing elements 90.

The cross-sectional dimensions of the weight distributing elements 90 is about equal to a cross-sectional dimension of the inner cavity (or of the core mandrel 1) to avoid any noise generation and/or vibrations when handling the stick 10. As shown in figures 5A-5D, a part 94 of the weight distributing element 90, in particular a part 94 of the cantilevered end sections (91a, 92b), is slightly oversized with respect to the cross-section of the inner cavity. The cantilevered end sections (91a, 92b) in this embodiment act as resilient pressurizing elements that keep the elements 90 in position within the inner cavity.

As shown in the embodiments of figures 5C and 5D, weight distributing elements 90 may be provided comprising a stack of lamellae 95. Such elements 90 are provided at an end of the string 9 (see figure 6) and readily conform to the rather large curvature, encountered in the curl-shaped head section 31 of a field hockey stick 10 by mutual shearing of the lamellae 95 in the inner cavity. The embodiment shown in figure 5D uses a weight distributing element 90 in which the lamellae 95 originate from a common solid part 96 of the element 90. This effectively holds the lamellae 95 together.

Weight distributing elements 90 with a different density and/or shape may also be provided in the string 9, for instance by providing the elements 90 with holes 97, as shown in figure 5B.

The method according to the invention allows to produce a sport stick or other elongated article having a well defined inner cavity that, in a preferred embodiment, substantially extends from the grip end of the shaft to the outer end of the head section of the sport stick, and allows to accept the string 9 of weight distributing elements 90.

The sport stick thereto preferably has dimensions of the inner cavity thereof that do not deviate between cross-sections of the sport stick by more than 10%, more preferably by more than 5%, and most preferably by more than 2 %.

## Claims

1. Method of manufacturing an elongated curved article (10) having a shaft (20) and a functional head section (30), the method comprising the steps of:
a) providing a dimensionally stable core mandrel (1), wherein the core mandrel (1) substantially extends from a grip end (20a) of the shaft (20) to an outer end (31) of the functional head section (30);
b) overlaying first reinforcing fibers onto the core mandrel (1) to form one or more first wall parts (31, 32, 33a, 33b);
c) providing at least one shaping element (2a, 2b, 4a, 4b) to the overlaid core mandrel (1);
d) overlaying second reinforcing fibers onto the core mandrel (1) and the at least one shaping element (2a, 2b, 4a, 4b) to form one or more second wall parts (41, 41-1);
e) providing a matrix material and consolidating the matrix material;
wherein the core mandrel (1) is provided to form an elongated curved article (10) having a well defined inner cavity, wherein the method further comprises f) removing the core mandrel (1) or a part of the core mandrel (1) after step e) to form the inner cavity, wherein the inner cavity substantially extends from a grip end (20a) of the shaft (20) to an outer end of the functional head section (30), and g) providing the inner cavity with at least one weight distributing element (90) of which a cross-sectional dimension is about equal to a cross-sectional dimension of the inner cavity, wherein the at least one weight distributing element (90) has a relatively low stiffness to be able to accommodate a curvature in the elongated article (10), and wherein a dimension is considered about equal to another dimension when deviating less than 10 % from the other dimension.

2. Method according to claim 1, wherein the core mandrel (1) is provided with at least one shaping element (2a, 2b, 4a, 4b) before overlaying the first reinforcing fibers.

3. Method according to any one of the preceding claims, wherein the core mandrel (1) is provided with an internal part that when removed forms a well defined inner cavity.

4. Method according to any one of the preceding claims, wherein overlaying with the first and/or second reinforcing fibers is performed by in situ braiding the reinforcing fibers onto the core mandrel (1) or overlaid core mandrel (1).

5. Method according to claim 4, wherein the in-situ braiding is performed from a grip end (20a) of the shaft (20) to an outer end of the functional head section (30) and/or vice versa.

6. Method according to any one of the preceding claims, wherein the core mandrel (1) has a constant cross-section along the elongated curved article (10).

7. Method according to any one of the preceding claims, wherein the functional head section (30) of the elongated curved article (10) comprises a contacting surface, and a first wall part (31, 32, 33a, 33b) extends perpendicular to said contacting surface.

8. Method according to any one of the preceding claims, wherein weight distributing elements (90) are interconnected to form a string (9) of interconnected weight distributing elements (90).

9. Method according to any one of the preceding claims, wherein a part of the at least one weight distributing element (90) is slightly oversized with respect to the cross-section of the inner cavity.

10. Method according to any one of the preceding claims, wherein the at least one weight distributing element (90) extends from a grip end (20a) of the shaft (20) to an outer end of the functional head section (30).

11. Method according to any one of the preceding claims, wherein weight distributing elements (90) with a different density and/or shape are provided in the inner cavity.

12. Method according to any one of the preceding claims, wherein the elongated curved article (10) comprises a field hockey stick, an ice hockey stick or a cricket stick, preferably a field hockey stick.

13. Elongated curved article (10), obtainable by a method according to any one of the preceding claims, comprising a shaft (20) and a functional head section (30), and a well defined inner cavity, wherein the inner cavity substantially extends from a grip end (20a) of the shaft (20) to an outer end of the functional head section (30), and wherein the inner cavity is provided with at least one weight distributing element (90) of which a cross-sectional dimension is about equal to a cross-sectional dimension of the inner cavity, wherein a dimension is considered about equal to another dimension when deviating less than 10 % from the other dimension, wherein the at least one weight distributing element (90) has a relatively low stiffness to be able to accommodate a curvature in the elongated article (10), and wherein dimensions of the inner cavity do not deviate between cross-sections of the elongated curved article (10) by more than 10%, more preferably by more than 5%, and most preferably by more than 2 %.

14. Elongated curved article (10) according to claim 13, wherein the elongated curved article (10) comprises a field hockey stick, an ice hockey stick or a cricket stick.

15. Elongated curved article (10) according to claim 14, wherein the elongated curved article (10) comprises a field hockey stick.

## Patentansprüche

1. Verfahren zum Herstellen eines länglichen gekrümmten Artikels (10), welcher einen Schaft (20) und einen funktionalen Kopfabschnitt (30) aufweist, wobei das Verfahren die folgenden Schritte umfasst:
a) Bereitstellen eines formstabilen Kerndorns (1), wobei der Kerndorn (1) sich im Wesentlichen von einem Griffende (20) von dem Schaft (20) zu einem äußeren Ende (31) von dem funktionalen Kopfabschnitt (30) erstreckt;
b) Bedecken des Kerndorns (1) mit ersten Verstärkungsfasern, um eine oder mehrere erste Wandteile (31, 32, 33a, 33b) zu bilden;
c) Bereitstellen, dem bedeckten Kerndorn (1), von zumindest einem Formelement (2a, 2b, 4a, 4b);
d) Bedecken des Kerndorns (1) und des zumindest einen Formelements (2a, 2b, 4a, 4b) mit zweiten Verstärkungsfasern, um eine oder mehrere zweite Wandteile (41, 41-1) zu bilden;
e) Bereitstellen eines Matrixmaterials und Verfestigen des Matrixmaterials;
wobei der Kerndorn (1) vorgesehen wird, um einen verlängerten gekrümmten Artikel (10) zu bilden, welcher einen gut definierten inneren Hohlraum aufweist, wobei das Verfahren weiterhin umfasst f) Entfernen des Kerndorns (1) oder eines Teils von dem Kerndorn (1) nach dem Schritt e), um den inneren Hohlraum zu bilden, wobei sich der innere Hohlraum im Wesentlichen von einem Griffende (20) von dem Schaft (20) zu einem äußeren Ende von dem funktionalen Kopfabschnitt (30) erstreckt, und g) Versehen des inneren Hohlraums mit einem Gewichtsverteilungselement (90), dessen Querschnittsabmessung ungefähr gleich zu der Querschnittsabmessung des inneren Hohlraums ist, wobei das zumindest eine Gewichtsverteilungselement (90) eine relativ geringe Steifigkeit aufweist, um in der Lage zu sein, eine Krümmung in dem länglichen Artikel (10) aufzunehmen, und wobei eine Abmessung als gleich zu einer weiteren Abmessung angesehen wird, wenn sie weniger als 10 % von der anderen Abmessung abweicht.

2. Verfahren gemäß Anspruch 1, wobei der Kerndorn (1) mit zumindest einem Formelement (2a ,2b, 4a, 4b) versehen wird, bevor es mit den ersten Verstärkungsfasern bedeckt wird.

3. Verfahren gemäß irgendeinem der vorhergehenden Ansprüche, wobei der Kerndorn (1) mit einem inneren Teil versehen ist, welches, wenn es entfernt wird, einen gut definierten inneren Hohlraum bildet.

4. Verfahren gemäß irgendeinem der vorhergehenden Ansprüche, wobei ein Bedecken mit den ersten und/oder zweiten Verstärkungsfasern durchgeführt wird durch In-Situ-Flechten der Verstärkungsfasern auf den Kerndorn (1) oder den bedeckten Kerndorn (1).

5. Verfahren gemäß Anspruch 4, wobei das In-Situ-Flechten von einem Griffende (20) von dem Schaft (20) zu einem äußeren Ende von dem funktionalen Kopfabschnitt (30) und/oder umgekehrt durchgeführt wird.

6. Verfahren gemäß irgendeinem der vorhergehenden Ansprüche, wobei der Kerndorn (1) einen konstanten Querschnitt entlang des länglichen gekrümmten Artikels (10) aufweist.

7. Verfahren gemäß irgendeinem der vorhergehenden Ansprüche, wobei der funktionale Kopfabschnitt (30) von dem länglichen gekrümmten Artikel (10) eine Kontaktoberfläche umfasst, und wobei sich ein erstes Wandteil (31, 32, 33a, 33b) senkrecht zu der Kontaktoberfläche erstreckt.

8. Verfahren gemäß irgendeinem der vorhergehenden Ansprüche, wobei Gewichtsverteilungselemente (90) zwischenverbunden sind, um eine Kette (9) von zwischenverbundenen Gewichtsverteilungselementen (90) zu bilden.

9. Verfahren gemäß irgendeinem der vorhergehenden Ansprüche, wobei ein Teil von dem zumindest einen Gewichtsverteilungselement (90) hinsichtlich des Querschnitts von dem inneren Hohlraum leicht überbemessen ist.

10. Verfahren gemäß irgendeinem der vorhergehenden Ansprüche, wobei sich das zumindest eine Gewichtsverteilungselement (90) von einem Griffende (20a) von dem Schaft (20) zu einem äußeren Ende von dem funktionalen Kopfabschnitt (30) erstreckt.

11. Verfahren gemäß irgendeinem der vorhergehenden Ansprüche, wobei Gewichtsverteilungselemente (90) mit unterschiedlicher Dichte und/oder Form in dem inneren Hohlraum vorgesehen sind.

12. Verfahren gemäß irgendeinem der vorhergehenden Ansprüche, wobei der längliche gekrümmte Artikel (10) einen Feldhockeyschläger, einen Eishockeyschläger oder einen Kricketschläger, vorzugsweise einen Feldhockeschläger, umfasst.

13. Verlängerter gekrümmter Artikel (10), welcher durch ein Verfahren gemäß irgendeinem der vorhergehenden Ansprüche erhältlich ist, umfassend einen Schaft (20) und einen funktionalen Kopfabschnitt (30), und einen gut definierten inneren Hohlraum, wobei der innere Hohlraum sich im Wesentlichen von einem Griffende (20a) von dem Schaft (20) zu einem äußeren Ende von dem funktionalen Kopfabschnitt (30) erstreckt, und wobei der innere Hohlraum mit zumindest einem Gewichtsverteilungselement (90) versehen ist, dessen Querschnittsabmessung ungefähr gleich zu der Querschnittsabmessung des inneren Hohlraums ist, wobei eine Abmessung als gleich zu einer weiteren Abmessung angesehen wird, wenn sie weniger als 10 % von der anderen Abmessung abweicht, wobei das zumindest eine Gewichtsverteilungselement (90) eine relativ geringe Steifigkeit aufweist, um in der Lage zu sein, eine Krümmung in dem länglichen Artikel (10) aufzunehmen, und wobei Abmessungen von dem inneren Hohlraum nicht um mehr als 10 % von den Querschnittsabmessungen des länglichen gekrümmten Artikels (10) abweichen, noch bevorzugter nicht mehr als 5 %, und am bevorzugtesten nicht mehr als 2 %.

14. Länglicher gekrümmter Artikel (10) gemäß Anspruch 13, wobei der längliche gekrümmte Artikel (10) einen Feldhockeyschläger, einen Eishockeyschläger oder einen Kricketschläger umfasst.

15. Länglicher gekrümmter Artikel (10) gemäß Anspruch 14, wobei der längliche gekrümmte Artikel einen Feldhockeschläger umfasst.

## Revendications

1. Procédé de fabrication d'un article incurvé allongé (10) ayant un manche (20) et une section de tête fonctionnelle (30), le procédé comprenant les étapes de :
a) fourniture d'un mandrin central dimensionnement stable (1), dans lequel le mandrin central (1) s'étend sensiblement depuis une extrémité de poignée (20a) du manche (20) jusqu'à une extrémité extérieure (31) de la section de tête fonctionnelle (30) ;
b) recouvrement du mandrin central (1) avec des premières fibres de renfort pour former une ou plusieurs premières parties de paroi (31, 32, 33a, 33b) ;
c) fourniture d'au moins un élément de façonnage (2a, 2b, 4a, 4b) sur le mandrin central (1) recouvert ;
d) recouvrement du mandrin central (1) et de l'au moins un élément de façonnage (2a, 2b, 4a, 4b) avec des secondes fibres de renfort pour former une ou plusieurs secondes parties de paroi (41, 41-1) ;
e) fourniture d'un matériau de matrice et consolidation du matériau de matrice ;
dans lequel le mandrin central (1) est prévu pour former un article incurvé allongé (10) ayant une cavité intérieure bien définie, dans lequel le procédé comprend en outre
f) l'enlèvement du mandrin central (1) ou d'une partie du mandrin central (1) après l'étape e) pour former la cavité intérieure, dans lequel la cavité intérieure s'étend sensiblement depuis une extrémité de poignée (20a) du manche (20) jusqu'à une extrémité extérieure de la section de tête fonctionnelle (30), et
g) le fait de pourvoir la cavité intérieure d'au moins un élément de répartition de poids (90) dont une dimension de coupe transversale est approximativement égale à une dimension de coupe transversale de la cavité intérieure, dans lequel l'au moins un élément de répartition de poids (90) a une rigidité relativement basse pour pouvoir s'adapter à une courbure de l'article allongé (10), et dans lequel il est considéré qu'une dimension est approximativement égale à une autre dimension lorsqu'un écart entre celles-ci est inférieur à 10 %.

2. Procédé selon la revendication 1, dans lequel le mandrin central (1) est pourvu d'au moins un élément de façonnage (2a, 2b, 4a, 4b) avant le recouvrement avec les premières fibres de renfort.

3. Procédé selon l'une quelconque des revendications précédentes, dans lequel le mandrin central (1) est pourvu d'une partie interne qui, lorsqu'elle est enlevée, forme une cavité intérieure bien définie.

4. Procédé selon l'une quelconque des revendications précédentes, dans lequel le recouvrement avec les premières et/ou secondes fibres de renfort est effectué par un tressage sur place des fibres de renfort sur le mandrin central (1) ou le mandrin central (1) recouvert.

5. Procédé selon la revendication 4, dans lequel le tressage sur place est effectué depuis une extrémité de poignée (20a) du manche (20) jusqu'à une extrémité extérieure de la section de tête fonctionnelle (30) et/ou vice versa.

6. Procédé selon l'une quelconque des revendications précédentes, dans lequel le mandrin central (1) a une coupe transversale constante le long de l'article incurvé allongé (10).

7. Procédé selon l'une quelconque des revendications précédentes, dans lequel la section de tête fonctionnelle (30) de l'article incurvé allongé (10) comprend une surface de contact, et une première partie de paroi (31, 32, 33a, 33b) s'étend perpendiculairement à ladite surface de contact.

8. Procédé selon l'une quelconque des revendications précédentes, dans lequel des éléments de répartition de poids (90) sont interconnectés pour former une chaîne (9) d'éléments de répartition de poids (90) interconnectés.

9. Procédé selon l'une quelconque des revendications précédentes, dans lequel une partie de l'au moins un élément de répartition de poids (90) est légèrement surdimensionnée par rapport à la coupe transversale de la cavité intérieure.

10. Procédé selon l'une quelconque des revendications précédentes, dans lequel l'au moins un élément de répartition de poids (90) s'étend depuis une extrémité de poignée (20a) du manche (20) jusqu'à une extrémité extérieure de la section de tête fonctionnelle (30).

11. Procédé selon l'une quelconque des revendications précédentes, dans lequel des éléments de répartition de poids (90) avec une densité et/ou une forme différentes sont prévus dans la cavité intérieure.

12. Procédé selon l'une quelconque des revendications précédentes, dans lequel l'article incurvé allongé (10) comprend une crosse de hockey sur gazon, une crosse de hockey sur glace ou une batte de cricket, de préférence une crosse de hockey sur gazon.

13. Article incurvé allongé (10), pouvant être obtenu par un procédé selon l'une quelconque des revendications précédentes, comprenant un manche (20) et une section de tête fonctionnelle (30), et une cavité intérieure bien définie, dans lequel la cavité intérieure s'étend sensiblement depuis une extrémité de poignée (20a) du manche (20) jusqu'à une extrémité extérieure de la section de tête fonctionnelle (30), et dans lequel la cavité intérieure est pourvue d'au moins un élément de répartition de poids (90) dont une dimension de coupe transversale est approximativement égale à une dimension de coupe transversale de la cavité intérieure, dans lequel il est considéré qu'une dimension est approximativement égale à une autre dimension lorsqu'un écart entre celles-ci est inférieur à 10 %, dans lequel l'au moins un élément de répartition de poids (90) a une rigidité relativement basse pour pouvoir s'adapter à une courbure de l'article allongé (10), et dans lequel des écarts de dimensions de la cavité intérieure entre des coupes transversales de l'article incurvé allongé (10) ne dépassent pas 10 %, plus préférablement 5 %, et idéalement 2%.

14. Article incurvé allongé (10) selon la revendication 13, dans lequel l'article incurvé allongé (10) comprend une crosse de hockey sur gazon, une crosse de hockey sur glace ou une batte de cricket.

15. Article incurvé allongé (10) selon la revendication 14, dans lequel l'article incurvé allongé (10) comprend une crosse de hockey sur gazon.
